# EUROPÄISCHE PATENTANMELDUNG

(11) **EP 0 976 610 A2**
(43) Veröffentlichungstag der Anmeldung: **02.02.2000**
(21) Anmeldenummer: 99107612.6
(22) Anmeldetag: 16.04.1999
(51) Int. Cl.: B60N 3/10

(54) **Behälter mit angelenktem Verschlussdeckel**

(30) Priorität: 31.07.1998 DE 19834488
(71) Anmelder: Preh-Werke GmbH & Co. KG, 97616 Bad Neustadt a.d. Saale (DE)
(72) Erfinder: Then, Gerhard, 97616 Bad Neustadt (DE)
(74) Vertreter: Pfeiffer, Helmut, Dipl.-Ing.

(57) **Zusammenfassung**

Der neue Verschlußdeckel weist daher die Merkmale auf, daß die Vertiefung (21) der Kurvenbahn (17) bzw. ein Bahnbereich (22), der bei der Sperrung durch einen Sperransatz (23) der Sperrklinke (16) belastet ist, einen Rampenansatz (24) aufweist, der mit einer Abschrägung (25) des Sperransatzes (24) zusammenwirkt und bei Überschreiten einer vorbestimmten Auflagelast durch Auswandern der Sperrklinke (16) überwunden wird.

## Beschreibung

Die Erfindung betrifft einen Behälter mit angelenktem Verschlußdeckel, wie er häufig als Kühlbehälter oder dergleichen für Kraftfahrzeuge zum Einsatz kommt.

Bei den dort vorliegenden, beengten Platzverhältnissen wirkt der geöffnete Verschlußdeckel sperrig und unterliegt nicht funktionsgerechten Belastungen durch zufälliges Anstoßen usw.

Darüber hinaus wirkt der angelenkte Verschlußdeckel ausgesprochen unschön, da er in den Anlenkungen spielbehaftet ist und daher unter Umständen in Schiefstellung zum Behälter steht.

Aus diesem Grund ist in der nicht vorveröffentlichten DE 197 55 554.3 bereits eine Lösung angegeben, bei der bei einem Behälter mit angelenktem Verschlußdeckel der geöffnete Verschlußdeckel nicht mehr sperrig wirkt und die gesamte Ausführung einen gediegenen Eindruckt macht.
Es hat sich aber gezeigt, daß bei dieser Lösung durch Fehlbedienung eine Überbeanspruchung und Zerstörung einer Sperrklinke auftreten kann.

Hiervon ausgehend liegt der Erfindung die Aufgabe zugrunde, Maßnahmen aufzufinden, mit denen bei einem Behälter mit angelenktem Verschlußdeckel selbst bei Fehlbedienung ausgeschlossen ist, daß die Sperrklinke zerstört wird.

Diese Aufgabe ist durch die im Kennzeichen des Patentanspruchs 1 angegebenen Merkmale gelöst worden, wobei vorteilhafte Weiterbildungen mit den Unteransprüchen angegeben sind.

Ein Ausführungsbeispiel der Erfindung ist in der Zeichnung dargestellt und wird nachfolgend beschrieben.

Die Zeichnung zeigt:
- Fig. 1: einen Längsschnitt eines Behälters;
- Fig. 2 und 3: eine Seitenansicht des Behälters nach Fig. 1,
- Fig. 4: einen Schnitt aus Fig. 3.

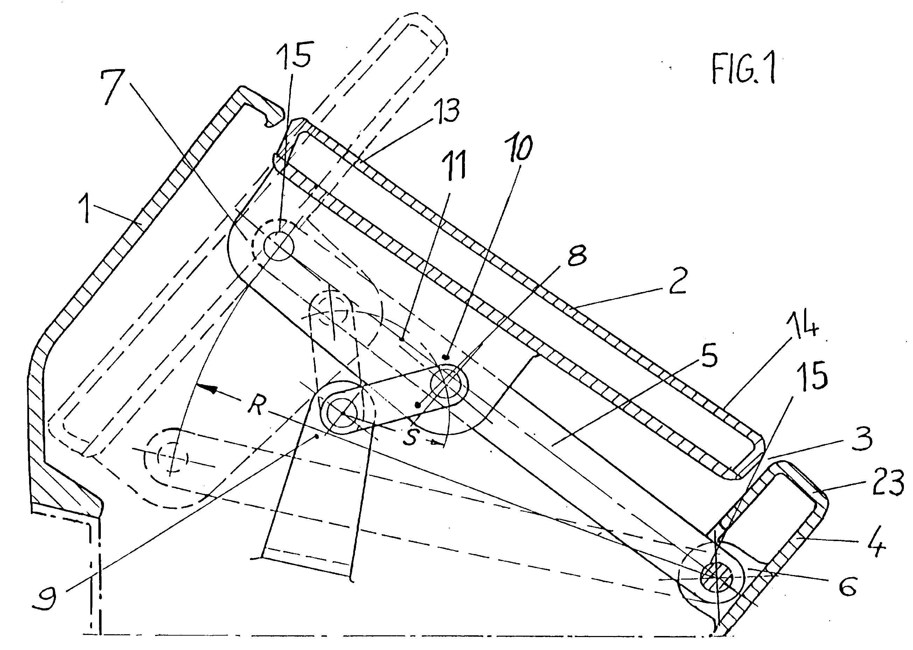

Fig. 1 zeigt einen Längsschnitt eines Behälters 1 mit angelenktem Verschlußdeckel 2. Der Behälter 1 weist eine Öffnung 3 auf, die durch eine gefällig aussehende Umrahmung 4 begrenzt ist.

Innerhalb dieser Umrahmung 4 ruht in geschlossener Position der Verschlußdeckel 2, wobei der Verschlußdeckel 2 mit einem ersten Hebelpaar 5 verbunden ist, das an einem Behälterlagerpaar 6 und an einem vom Behälterlagerpaar 6 ausgehend am äußeren Rand des Verschlußdeckels 2 angeordneten Deckellagerpaar 7 angelenkt ist, und mit einem zweiten Hebelpaar 8, das an einem Behälterlagerpaar 9 und an einem mittig am Verschlußdeckel 2 angeordneten Deckellagerpaar 10 angelenkt ist, wobei die Mitten der beiden Deckellagerpaare 7, 10 und die des Behälterlagerpaars 6 für das erste Hebelpaar 5 in Schließstellung des Verschlußdeckels 2 auf einer in etwa parallelen Geraden 11 zum Verschlußdeckel 2 liegen und der Verschlußdeckel 2 in dieser Stellung durch einen Sperrmechanismus 12 gehalten ist. Bei dem Sperrmechanismus 12 handelt es sich um einen Sperrmechanismus, der durch Überschließen des Verschlußdeckels 2 ein- oder ausrastet.

Durch diese Maßnahmen ist es möglich, den Verschlußdeckel 2 nach Ausrasten der Sperre durch Drücken eines oberen Deckelteils 13 oder durch eine Federkraft zu öffnen. Dabei folgt der obere Deckelteil 13 der Schwenkbewegung R des ersten Hebelpaars 5 in die Umrahmung 4 hinein und gleichzeitig ein unteres Deckelteil 14 der Schwenkbewegung S des zweiten Hebelpaars 8, so daß der Verschlußdeckel 2 in die gestrichelt dargestellte Position gelangt.

In dieser Position ragt der Verschlußdeckel 2 nur noch unwesentlich aus der Umrahmung 4 des Behälters 1 heraus. Durch die an den seitlichen Enden des Verschlußdeckels 2 angeordneten Deckellagerpaare 7 und 10 und damit ebenfalls hierzu seitlich angeordneten Hebelpaare 5 und 8 ist der Behälter 1 sehr gut zugänglich, d. h. be- und entladbar.

Fig. 1 zeigt den Verschlußdeckel 2 in der Stellung, in der ein Überschließen vorliegt, d. h. in der der Sperrmechanismus 12 ein- oder ausrastet. Hierbei ist ersichtlich, daß die Mitte des Deckellagerpaares 10 des zweiten Hebelpaares 8 beim Überschließen aus der parallelen Geraden 11 heraus vom Verschlußdeckel 2 weg wandert.

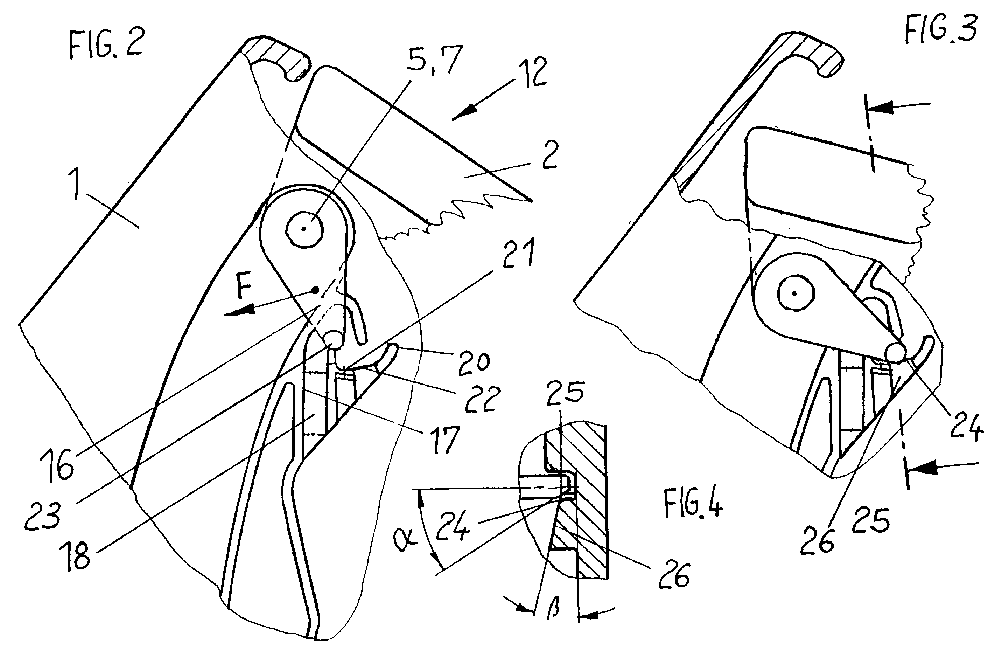

Wie in Fig. 2 dargestellt, die eine Seitenansicht des Behälters 2 zeigt, ist der Sperrmechanismus 12 durch eine von einer Feder (Pfeil F) belasteten Sperrklinke 16 am Deckellagerpaar 7 des ersten Hebelpaars 5 gebildet, die mit einer bekannten herzförmigen Kurvenbahn 17 zusammenwirkt, die in der Behälterwandung angeordnet ist.

Diese Kurvenbahn 17 weist an einem unteren linken Abschnitt 18 eine Steigung auf, so daß die Sperrklinke 16 bei der Öffnungsverstellung in Axialrichtung angehoben wird und in einen rechten Abschnitt 19 hineinspringt, von dem aus eine Rückstellung in den linken Abschnitt 18 bei Schließverstellung gesperrt ist.

Beim Schließen des Verschlußdeckels 2 wandert die Sperrklinke 16 in einen oberen Abschnitt 20 der Kurvenbahn 17 und springt beim Überhub während des Überhubes des Verschlußdeckels 2 in eine Vertiefung 21 der Kurvenbahn 17, aus der sie erst bei einem erneuten Überhub herausspringen kann, womit dann eine Öffnung des Verschlußdeckels 2 möglich wird.

Es ist nun vorgesehen, wie in Fig. 3, die eine Seitenansicht des Behälters 1 zeigt, und in Fig. 4, die einen Schnitt (Pfeile) aus Fig. 3 zeigt, dargestellt ist, daß die Vertiefung 21 der Kurvenbahn 17 bzw. ein Bahnbereich 22, der bei der Sperrung durch einen Sperransatz 23 der Sperrklinke 16 belastet ist, einen Rampenansatz 24 aufweist, der mit einer Abschrägung 25 mit einem Winkel α des Sperransatzes 23 zusammenwirkt und bei Überschreiten einer vorbestimmten Auflagelast durch Auswandern der Sperrklinke 16 überwunden wird, so daß die Sperrung aufgehoben wird und der Verschlußdeckel 2 geöffnet werden kann trotz der Fehlbedienung, die darin bestehen kann, daß zum Beispiel auf den oberen Rand des Verschlußdeckels 2 gedrückt wurde.

Es ist vorgesehen, daß im Anschluß an den Rampenansatz 24 eine ansteigende Schräge 26 mit einem Winkel β angeordnet ist. Hierdurch wird eine Erhöhung der Kurvenbahn in dem Abschnitt 19 erreicht, der beim Schließen des Verschlußdeckels 2 von dem Sperransatz 23 überfahren wird.

## Patentansprüche

1. Behälter mit angelenktem Verschlußdeckel, bei dem der Verschlußdeckel mit einem ersten Hebelpaar verbunden ist, und mit einem zweiten Hebelpaar, wobei die Hebelpaare durch ein Behälterlagerpaar und ein Deckellagerpaar angelenkt sind und die Mitten der beiden Deckellagerpaare und die des Behälterlagerpaars für das erste Hebelpaar in Schließstellung des Verschlußdeckels auf einer in etwa parallelen Geraden zum Verschlußdeckel liegen und der Verschlußdeckel in dieser Stellung durch einen Sperrmechanismus gehalten ist, der durch Überschließen des Verschlußdeckels ein- oder ausrastet und bei dem eine federbelastete Sperrklinke am Deckellagerpaar des ersten Hebelpaars angeordnet ist, die mit einer herzförmigen Kurvenbahn als Teil des Sperrmechanismus zusammenwirkt, die in einer Behälterwandung angeordnet ist und die Sperrklinke in Sperrstellung in einer Vertiefung der Kurvenbahn hält, dadurch gekennzeichnet, daß die Vertiefung (21) der Kurvenbahn (17) bzw. ein Bahnbereich (22), der bei der Sperrung durch einen Sperransatz (23) der Sperrklinke (16) belastet ist, einen Rampenansatz (24) aufweist, der mit einer Abschrägung (25) des Sperransatzes (24) zusammenwirkt und bei Überschreiten einer vorbestimmten Auflagelast durch Auswandern der Sperrklinke (16) überwunden wird.

2. Behälter nach Anspruch 1, dadurch gekennzeichnet, daß im Anschluß an den Rampenansatz (24) eine ansteigende Schräge (26) angeordnet ist.
